Europäisches Patentamt

**European Patent Office**

**Office européen des brevets**

(19)

(11) Veröffentlichungsnummer: **0 215 337**
**B1**

(12) **EUROPÄISCHE PATENTSCHRIFT**

(45) Veröffentlichungstag der Patentschrift:
27.12.90

(51) Int. Cl.⁵: **B29C 47/06, B29C 47/28**

(21) Anmeldenummer: **86111698.6**

(22) Anmeldetag: **23.08.86**

(54) Extrusionskopf.

(30) Priorität: **16.09.85 DE 3532996**

(43) Veröffentlichungstag der Anmeldung:
**25.03.87 Patentblatt 87/13**

(45) Bekanntmachung des Hinweises auf die Patenterteilung:
**27.12.90 Patentblatt 90/52**

(84) Benannte Vertragsstaaten:
**AT DE FR GB IT SE**

(56) Entgegenhaltungen:
**EP-A- 0 110 493**
**EP-A- 0 149 321**
**DE-A- 2 345 049**
**DE-A- 3 044 535**
**FR-A- 2 320 819**
**US-A- 3 308 508**
**US-A- 3 966 861**
**US-A- 4 042 661**
**US-A- 4 249 875**

**KUNSTSTOFFE, Band 75, Nr. 9, September 1985,**
**Seiten 584-589, Carl Hanser Verlag, München, DE; J.**
**WORTBERG: "Blasfolienextrusion-Coextrusion und**
**Automatisierung"**
**KUNSTSTOFFE, Band 74, Nr. 1, Januar 1984,**
**Seiten 28-32, München, DE; P. FISCHER et al.: "Konzept**

(73) Patentinhaber: **BATTENFELD FISCHER**
**BLASFORMTECHNIK GMBH, Brüsseler Strasse 13,**
**D-5210 Troisdorf/Spich(DE)**

(72) Erfinder: **Wortberg, Johannes, Dr.-Ing., Büzerhof,**
**D-4630 Bochum(DE)**
Erfinder: **Junk, Paul Bernd, Dr.-Ing., Boettgerstrasse 5,**
**D-5206 Neukirchen 1(DE)**
Erfinder: **Franke, Harry, Elbinger Strasse 35,**
**D-4630 Bochum 1(DE)**

(74) Vertreter: **Müller, Gerd et al, Patentanwälte**
**HEMMERICH-MÜLLER-GROSSE-POLLMEIER-MEY**
**Hammerstrasse 2, D-5900 Siegen 1(DE)**

(56) Entgegenhaltungen: (Fortsetzung)
**und Auslegung von Coextrusions-Blasfolienanlagen"**
**PATENT ABSTRACTS OF JAPAN, Band 6,**
**Nr. 97 (M-134)[975], 5. Juni 1982; &**
**JP-A-57 32 918 (PLASTIC KOUGAKU KENKYUSHO**
**K.K.) 22-02-1982**

## Beschreibung

Die Erfindung betrifft einen Extrusionskopf mit mehreren hintereinander angeordneten Kopfabschnitten zum Strangpressen von schlauch- oder rohrförmigen Vorformlingen mit mehrschichtigem Wandaufbau aus in Extrudern plastifiziertem Kunststoffmaterial. Ein derartiger Extrusionskopf ist aus der EP-A 110 493 bekannt.

Es ist bekannt, ein- oder mehrschichtige Kunststoffbehälter im Blasformverfahren aus schlauch- oder rohrförmigen Vorformlingen herzustellen, die mittels sogenannten Extrusionsköpfen aus in Extrudern plastifiziertem Kunststoffmaterial stranggepreßt werden.

Während dabei die Vorformlinge für Behälter mit einschichtigem Wandaufbau völlig problemlos gefertigt werden können, bereitete es oft Schwierigkeiten, Vorformlinge mit mehrschichtigem Wandaufbau so zu extrudieren, daß die hieraus durch das Blasformen gefertigten Kunststoffbehälter eine einwandfreie Beschaffenheit haben.

Werden beim Strangpressen von Vorformlingen mit mehrschichtigem Wandaufbau alle diese Schichten konzentrisch zueinander etwa in gleicher Ebene gebildet, dann führt dies dazu, daß jeweils die äußeren Schichten zunächst in einem sehr großen Durchmesser extrudiert und dann unter Einbringung elastischer Umfangsdeformationen auf den späteren Rohrdurchmesser gestaucht werden müssen, während die innerste Schicht mit kleinstem Durchmesser im Verteilsystem einer sehr viel geringeren Umfangsdeformation unterliegt, weil sie ihren Durchmesser nur verhältnismäßig geringfügig ändern muß. Es kommt daher - insbesondere wenn unterschiedliche Kunststoffe in einer laminaren Struktur extrudiert werden - oft vor, daß die Schichten schlecht aufeinander haften und dadurch unzureichende Artikeleigenschaften in Bezug auf Stauchdruck- und/oder Fallfestigkeit verursachen.

Nachteilig hierbei ist aber auch der relativ große Durchmesser jedes einzelnen Extrusionskopfes, so daß diese nur schwer als Mehrfach-Extrusionsköpfe nebeneinander betrieben werden können.

Zur Vermeidung dieser Nachteile ist es zwar auch möglich, die Verteilsysteme zum Aufbau der einzelnen Wandschichten im Extrusionskopf hintereinander zu setzen. Dieser Aufbau hat jedoch zur Folge, daß die Länge des Extrusionskopfes in Abhängigkeit von der Anzahl der aufzubauenden Wandschichten beträchtlich variiert und daß sich dabei überlange Fließwege für das Kunststoffmaterial in einzelnen Schichten ergeben.

Während also bei der zuerst beschriebenen Bauart von Extrusionsköpfen eine extreme Variation der Durchmesserverhältnisse in den einzelnen Schichten vorkommen kann, ergeben sich im Falle der anderen Bauart extreme Variationen der Fließzeiten, Aufenthaltszeiten und Scherbeanspruchungen für die einzelnen Schichten.

Zweck der Erfindung ist es, die den bekannten Bauarten von Extrusionsköpfen anhaftenden Unzulänglichkeiten zu vermeiden. Es ist daher das Ziel der Erfindung, einen Extrusionskopf der eingangs näher spezifizierten Gattung anzugeben, welcher einerseits geringe Durchmesservariationen zwischen den einzelnen Schichten ermöglicht, andererseits aber auch unerwünscht lange Fließwege bzw. Abmessungen am Extrusionskopf vermeidet.

Gelöst wird diese Aufgabe nach den Kennzeichnungsmerkmalen des Anspruchs 1 dadurch, daß gleiche oder gleichartige Kopfabschnitte mit jeweils einem zentralen, ringförmigen Austritts- und/oder Durchgangskanal wahlweise hintereinandersetzbar sind, daß jeder dieser Kopfabschnitte mindestens einen mit einem Ringspalt in den Austritts- und/oder Durchgangskanal einmündenden Wendelverteiler enthält, und daß die einander zugewendeten Enden benachbarter Kopfabschnitte zueinander komplementär passende Eingriffselemente aufweisen, über die die Austritts- und/oder Durchgangskanäle in Achsfluchtlage bringbar sind.

Da gewisse gemeinsame Fließweglängen einander benachbarter Kunststoffschichten im Hinblick auf die bestmögliche Verbindung bzw. Verschweißung vorteilhaft sind, lassen sich auf der Basis dieser Merkmale Extrusionsköpfe erstellen, die den unterschiedlichsten Bedürfnissen Rechnung tragen.

Nach Anspruch 2 wird erfindungsgemäß vorgeschlagen, daß jeder Kopfabschnitt mit bis zu drei konzentrisch ineinandersitzenden Wendelverteilern ausgestattet ist, die konzentrisch ineinander sitzen und sämtlich in den Austritts- und/oder Durchgangskanal des sie enthaltenden Kopfabschnitts münden. Mit einem einzelnen Kopfabschnitt relativ geringer Länge lassen sich also Vorformlinge strangpressen, die einen ein- bis dreischichtigen Wandaufbau haben. Zwei hintereinandergesetzte Kopfabschnitte ermöglichen die Herstellung von Vorformlingen mit zwei bis sechs Wandschichten, während durch die Benutzung von drei hintereinander gesetzten Kopfabschnitten die Fertigung von Vorformlingen zuläßt, welche zwischen drei und neun Wandschichten besitzen.

Durch verschidenartige Kombination von Kopfabschnitten läßt sich also mit relativ geringem technischen Aufwand eine Anpassung an die unterschiedlichsten Bedingungen erreichen.

Nach einem anderen wichtigen Weiterbildungsmerkmal der Erfindung ist gemäß Anspruch 3 vorgesehen, daß jeder Kopfabschnitt ein Endstück trägt, das eine der Anzahl der Wendelverteiler entsprechende Anzahl von Anschluß- und Zuführkanälen für das plastifizierte Kunststoffmaterial enthält.

Mit diesen Endstücken lassen sich dabei, in Umfangsrichtung winkelversetzt, die Extruder für die unterschiedlichen Kunststoffmaterialien verbinden.

In vielen Fällen erweist es sich als empfehlenswert, nach Anspruch 4 zwischen zwei gleiche oder gleichartige Kopfabschnitte einen lediglich mit einem Durchlaßkanal versehenen Kopfabschnitt einzusetzen, um hierdurch gemeinsame Fließweglängen bereits laminarisierter Schmelzeschichten zu schaffen und dadurch die Haftung zwischen diesen zu verbessern.

Nach Anspruch 5 ist es gemäß der Erfindung aber auch möglich, daß der Austrittsdüse ein lediglich mit einem Durchlaßkanal versehener Kopfabschnitt vorgeschaltet wird, um dort für sämtliche laminarisierten Schmelzeschichten einen gemeinsamen Fließweg zu schaffen.

Besonders bewährt hat es sich desweiteren, wenn entsprechend der Lehre des Anspruchs 6 bis zu drei gleiche oder gleichartige Kopfabschnitte mit je mindestens einem Wendelverteiler hintereinander schaltbar sind. Die Gesamtlänge des Extrusionskopfes überschreitet dabei den dreifachen Durchmesser nur geringfügig. Es können jedoch mit einem solchen Extrusionskopf Vorformlinge stranggepreßt werden, die bis zu neun sich überlagernde Schichten aufweisen.

Als zweckmäßig erwiesen hat sich für manche Fälle auch ein Aufbau gemäß Anspruch 7, d. h. daß bei den hintereinander geschalteten Kopfabschnitten die Anzahl der Wendelverteiler in Richtung zur Austrittsdüse hin abnimmt. Es ergeben sich hieraus nämlich vielfach reologisch-thermodynamische Vorteile.

Nach Anspruch 8 besteht erfindungsgemäß auch die Möglichkeit, daß die Wendelverteiler vom Kopfabschnitt und/oder voneinander thermisch getrennt eingebaut sind, wobei sie gemäß Anspruch 9 mit voneinander unabhängigen Temperiervorrichtungen versehen bzw. verbunden werden können. Es ist dann möglich, eine unterschiedliche Temperierung der durch die einzelnen Wendelverteiler bewegten Schmelzeströme zu bewirken und hierdurch die unterschiedlichen zu verarbeitenden Kunststoffmaterialien optimal zu beeinflussen. So kann es sinnvoll sein, Kunststoffmaterialien mit sehr unterschiedlichen Temperaturen nach der Extrusion in den Extrusionskopf einzuspeisen und sie auch noch bei der Materialverteilung auf dieser Temperatur zu halten, um erst im aufeinandergeschichteten Extrudat einen Temperaturausgleich zu gestatten.

In baulicher Hinsicht ist gemäß Anspruch 10 schließlich noch vorgesehen, daß die Wendelverteiler jeweils aus Hülsen bestehen, die an ihrem Außenmantel einen schwach konischen Außenabschnitt großer Länge und einen steil konischen Endabschnitt geringer Länge haben, während ihr Innenmantel auf der ganzen Länge zylindrisch ausgeführt ist.

Weitere Merkmale und Vorteile des Gegenstandes der Erfindung werden nachfolgend an in der Zeichnung dargestellten Aus führungsbeispielen erläutert. Es zeigen

Figur 1 im Längsschnitt einen Extrusionskopf, der aus drei gleichartigen Kopfabschnitten zusammengesetzt ist,
Figur 2 eine Ansicht des Extrusionskopfes nach Figur 1 in Pfeilrichtung II,
Figur 3 einen Schnitt entlang der Linie III-III durch den Extrusionkopf nach Figur 1,
Figur 4 einen Schnitt entlang der Linie IV-IV durch den Extrusionskopf nach Figur 3,
Figur 5 die drei Kopfabschnitte des Extrusionskopfes nach Figur 1 in voneinander getrenntem Zustand, während die
Figuren 6 und 7 in rein schematischer Längsschnittdarstellung Ausbildungsvarianten für einen Extrusionskopf wiedergeben.

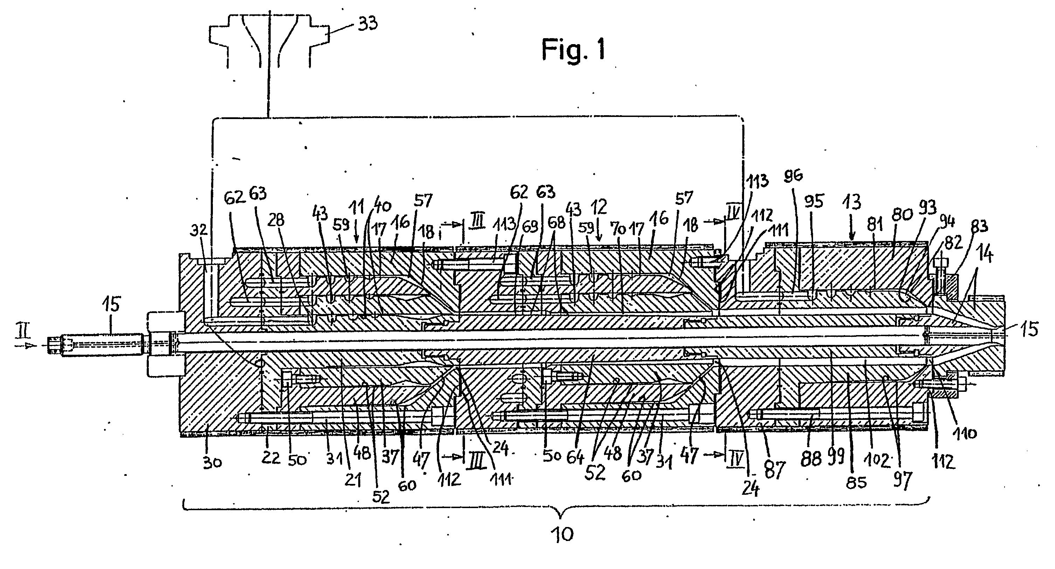

In Figur 1 der Zeichnung ist ein Extrusionskopf 10 zum Strangpressen von schlauch- oder rohrförmigen Vorformlingen im Längsschnitt dargestellt, welcher beispielsweise aus drei gleichartigen Kopfabschnitten 11, 12 und 13 besteht, die mit Achsfluchtlage hintereinander gesetzt sind. An den vorderen Kopfabschnitt 13 des Extrusionskopfes 10 schließt sich dabei die Austrittsdüse 14 an, deren Düsennadel 15 koaxial durch sämtliche Kopfabschnitte 11 bis 13 durchgeführt ist und vom Ende des hinteren Kopfabschnittes 11 her betätigt werden kann.

Sämtliche Kopfabschnitte 11, 12, 13 des Extrusionskopfes 10 haben zumindest einen gleichartigen Grundaufbau.

Der Kopfabschnitt 11 weist einen Mantelkörper 16 auf, der über den größten Teil seiner Länge mit einer zylindrischen Innenmantelfläche 17 versehen ist, an seinem vorderen Ende jedoch eine konische Verjüngung 18 aufweist. Diese konische Verjüngung 18 läuft an der Stirnseite 19 des Mantelkörpers 16 in eine zentrale Mündungsöffnung 20 aus.

Vom hinteren Ende des Kopfabschnitts 11 aus ragt in den Mantelkörper 16 ein Hülsenkörper 21 koaxial hinein, der von einem Halteflansch 22 absteht, und dessen freies Ende 23 zumindest annähernd bündig mit der Stirnfläche 19 des Mantelkörpers 16 abschließt, um mit dessen Mündungsöffnung 20 einen ringförmigen Austrittskanal 24 zu begrenzen.

Die Hülse 21 hat ein zentrales Durchgangslock 25 für die Düsennadel 15. An ihrem Außenumfang weist die Hülse 21 zumindest über den größten Teil ihrer Länge einen sich zum freien Ende 23 hin schwach konisch verjüngenden Mantelabschnitt 26 auf, welcher wiederum kurz vor dem freien Ende 23 eine taillenartige Einschnürung 27 enthält.

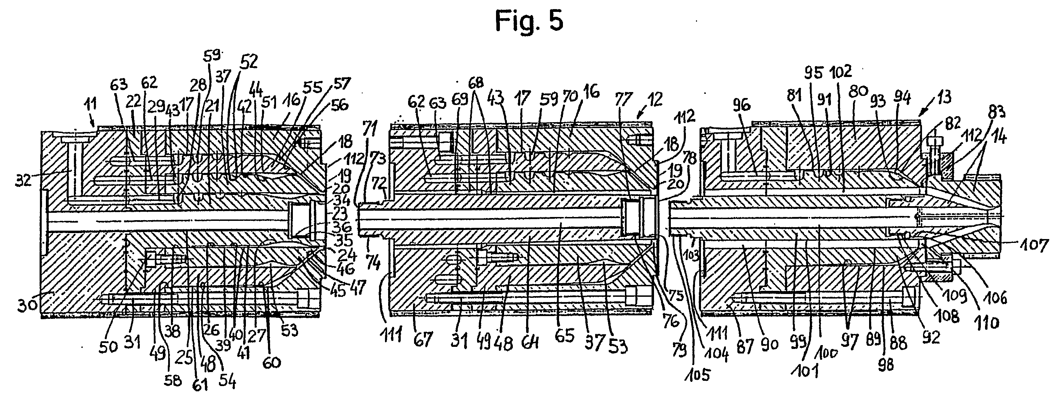

In den Mantelabschnitt 26 der Hülse 21 sind wendelförmig verlaufende Schmelzekanäle 28 eingearbeitet, die sich an einen achsparallel zur Längsachse der Hülse 21 verlaufenden Schmelze-Zuführkanal 29 anschließen und welche eine unterschiedliche Profiltiefe haben. Die Profiltiefe der Schmelzekanäle 28 nimmt nämlich in Richtung vom Halteflansch 22 der Hülse 21 weg zum freien Ende 23 derselben hin stetig ab, wie das deutlich den Figuren 1 und 5 entnommen werden kann.

Der Halteflansch 22 für die Hülse 21 ist zusammen mit einem Endstück 30 über Schrauben 31 mit dem Mantelkörper 16 lösbar verbunden, und zwar derart, daß der Zuführkanal 29 für die Schmelze in einen Anschlußkanal 32 übergeht, der seitlich am Entstück 30 ausmündet und den Anschluß für einen Extruder bildet.

Am freien Ende 23 sind relativ zum Querschnitt des Durchgangslochs 25 Aufweitungen 34 und 35 eingeformt, wobei die eine Aufweitung 34 glatte Passflächen aufweist, während die andere Aufweitung 35 mit einem Innengewinde 36 ausgestattet ist.

Die vom Halteflansch 22 abstehende Hülse 21 ist koaxial von einer weiteren Hülse 37 umgeben, welche auf dem hinteren, zylindrischen Mantelabschnitt 38 zentriert wird und über ihre ganze Länge einen zylindrischen Innenmantel 39 aufweist.

Der zylindrische Innenmantel 39 der Hülse 37 bildet zusammen mit dem schwach konischen Außenmantel 26 der Hülse 21 einen sogenannten Wendelverteiler 40, der einen ringförmigen Durchgangskanal 41 für die Schmelze bestimmt, innerhalb welchem die Schmelzebewegung allmählich von der sogenannten Wendelströmung im Bereich der Schmelzekanäle 28 in eine Axialströmung zum freien Ende 23 des Kopfabschnitts 11 hin übergeführt wird.

Der Außenmantel 42 der zweiten Hülse 37 ist in ähnlicher Weise gestaltet wie der Außenmantel 26 der ersten Hülse 21. Er hat nämlich eine zum freien Ende hin schwach konisch verjüngte Gestalt, weist in seinem hinteren Abschnitt Schmelzekanäle 43 auf, deren Profiltiefe in Richtung von hinten nach vorne stetig abnimmt und ist in der Nähe seines freien Endes mit einer taillenartigen Einschnürung 44 versehen.

Abweichend von der Hülse 21 ist jedoch die Hülse 37 an ihrem freien Ende mit einem steil konisch verjüngten Endabschnitt 45 versehen, dessen Mantelfläche 46 unter Bildung eines konischen Ringspaltes 47 der konischen Innenfläche 18 des Mantelkörpers 16 benachbart liegt.

Die zweite Hülse 37 ist konzentrisch von einer dritten Hülse 48 umgeben, welche von einem Halteflansch 49 absteht, mit dem einerseits die zweite Hülse 37 durch Schrauben 50 lösbar verbunden ist und über welchen andererseits die dritte Hülse 48 durch die Schrauben 31 mit dem Mantelkörper 16 und dem Endstück 30 in Halteverbindung steht.

Auch die dritte Hülse 48 hat wiederum nahezu auf ihrer ganzen Länge einen zylindrischen Innenmantel 51, welcher zusammen mit dem konischen Außenmantel 42 der zweiten Hälse 37 als Wendelverteiler 52 wirksam ist, der einen ringförmigen Schmelzekanal 53 einschließt, innerhalb welchem die ursprüngliche Wendelströmung in eine Axialströmung übergeführt wird, bevor die Schmelze dann in den konischen Ringspalt 47 gelangt und sich in Richtung zum Austrittskanal 24 bewegt.

Der Außenmantel 54 der dritten Hülse 48 ist wiederum über den größten Teil seiner Länge in Richtung zum freien Ende hin schwach konisch verjüngt gestaltet, er hat aber auch an seinem freien Ende einen steil konisch verjüngten Endabschnitt 55, dessen Mantelfläche 56 der konischen Mantelfläche 18 im Mantelkörper 16 unter Bildung eines Abstandsspaltes 57 gegenüberliegt. In der Nähe des Halteflansches 49 weist jedoch die dritte Hülse 48 einen zylindrischen Mantelabschnitt 58 auf, welcher passend zur Zentrierung in den zylindrischen Innenumfang des Mantelkörpers 16 hineinragt.

Auch im Außenmantel 54 der dritten Hülse 48 befinden sich Schmelzekanäle 59 mit sich in Richtung zum freien Ende hin stetig verjüngender Profiltiefe, wobei dieser Außenmantel 54 mit dem zylindrischen Innenabschnitt 17 des Mantelkörpers 16 als sogenannter Wendelverteiler 60 wirkt, der einen sich in Richtung zum freien Ende hin konisch erweiternden Ringspalt begrenzt, innerhalb welchem die Wendelströmung der Schmelze allmählich in eine Axialströmung übergeht, bevor sie durch den Spalt 57 und den Spalt 47 in den Bereich des ringförmigen Austrittskanals 24 gelangt.

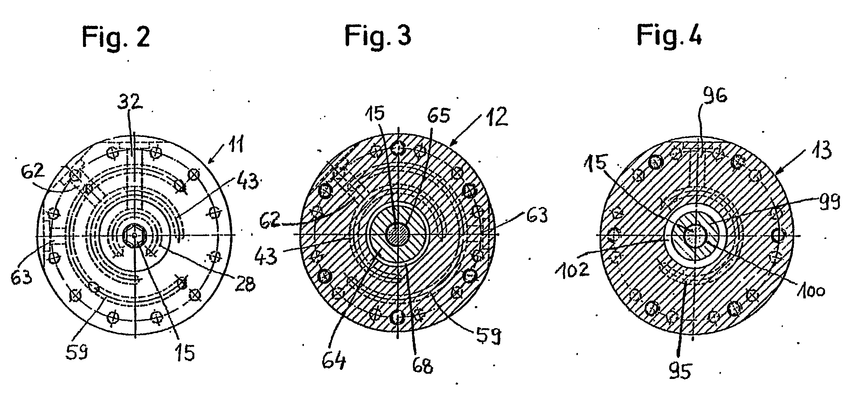

Erwähnt sei noch, daß die Schmelzekanäle 43 der zweiten Hülse 37 mit einem Zuführkanal 62 in Verbindung stehen, welcher von der Hülse 37 aus durch den Halteflansch 49 und den Halteflansch 22 in das Endstück 30 geht und dort seitlich ausmündet, wie das Figur 2 erkennen läßt.

Ein ähnlicher Zuführkanal 63 die Schmelze ist auch den Schmelzekanälen 59 in der dritten Hülse 48 zugeordnet, wie das ohne weiteres aus den Figuren 1 und 2 hervorgeht.

Der Aufbau des Kopfabschnittes 12 am Extrusionskopf 10 nach Figur 1 entspricht bezüglich des Mantelkörpers 16 sowie der darin koaxial zueinander aufgenommenen beiden Hülsen 37 und 48 praktisch vollständig dem Kopfabschnitt 11.

Eine Abweichung gegenüber dem Kopfabschnitt 11 liegt jedoch darin, daß der Kopfabschnitt 12 eine innere Hülse 64 mit einem zentralen Durchgangskanal 65 für die Düsennadel 15 enthält, welche anders angeordnet und ausgebildet ist, als die Hülse 21 im Kopfabschnitt 11.

Die Hülse 64 im Kopfabschnitt 12 ist relativ zu dessen übrigen Teilen lose ausgebildet, d. h., sie kann koaxial durch die Hülse 37 sowie auch das Endstück 66 des Kopfabschnittes 12 hindurchgesteckt werden. Dabei begrenzt sie zwischen ihrem Außenumfang, dem Innenmantel der Hülse 37 und einem Durchlaß 67 im Endstück 66 einen ringförmigen Durchgangskanal 68 für den vom Austrittskanal 24 des Kopfabschnitts 11 kommenden Schmelzestrang. Der Durchgangskanal 68 hat dabei zwei stufenförmig gegeneinander abgesetzte Längenabschnitte 69 und 70, welche sich durch entsprechende Umfangsgestaltung des Außenmantels der Hülse 64 in Durchtrittsrichtung des Schmelzestrangs jeweils leicht konisch erweitern.

Das hintere Ende 71 der Hülse 64 ragt aus dem hinteren Ende des Endstückes 67 heraus und ist dort mit Umfangsabstufungen 72 und 73 versehen. Während die Umfangsabstufung 72 eine glattflächige Passungsstufe ist, die mit der glattflächigen Passungsstufe 34 in der Hülse 21 korrespondieren kann, ist die Umfangsabstufung 73 mit Außengewinde 74 versehen, welches zum Innengewinde 36 in der Hülse 21 des Kopfabschnitts 11 paßt.

Das andere Ende der Hülse 64 hat eine mit dem freien Ende der Hülse 21 des Kopfabschnitts 11 übereinstimmende Ausgestaltung, enthält also stufenförmige Erweiterungen 75 und 76 gegenüber dem zentralen Durchlaß 65, von denen die Abstufungen 75 glatte Passungsflächen aufweist, während die Abstufung 76 mit Innengewinde 77 versehen ist. Die äußere Mantelfläche der Hülse 64 begrenzt am freien Ende 78 der Hülse mit dem Endabschnitt 20 des Mantelkörpers 16 einen ringförmigen Austrittskanal 79 für die Schmelze, in welchen der Ringspalt 57, 47 von radial auswärts einmündet, welcher zwischen der konischen Innenfläche 18 des Mantelkörpers 16 sowie den konischen Endabschnitten 55 und 45 der beiden Hülsen 48 und 37 bestimmt wird.

Der Kopfabschnitt 13 des Extrusionskopfes 10 nach Figur 1 hat einen Mantelkörper 80, dessen innere Mantelfläche einen zylindrischen Hauptabschnitt 81 sowie einen konischen Endabschnitt 82 enthält, der in eine Durchtrittsöffnung 83 am freien Ende 84 einmündet. Vom hinteren Ende aus ragt in den Mantelkörper 80 eine Hülse 85 hinein, die von einem Halteflansch 86 absteht, welcher zusammen mit einem Endstück 87 über Schrauben 88 mit dem Mantelkörper 80 verbunden ist.

Die Hülse 85 hat dabei einen zylindrischen Durchlaß 89, der sich an einen entsprechenden zylindrischen Durchlaß 90 im Endstück 87 anschließt.

Der Außenmantel der Hülse 85 hat einen sich schwach konisch verjüngenden Mantelabschnitt 91 und einen sich daran anschließenden steil konischen Endabschnitt 92, dessen Mantelfläche 93 unter Bildung eines Ringspaltes 94 der konischen Mantelfläche 82 im Mantelkörper 80 gegenüberliegt. Der konische Ringspalt 94 mündet dabei unmittelbar vor der Austrittsöffnung 83 aus. Der konische Mantelabschnitt 91 der Hülse 85 ist mit einem eingearbeiteten Schmelzekanal 95 versehen, dessen Profiltiefe in Richtung zum freien Hülsenende hin stetig abnimmt, wie das die Figuren 1 und 5 deutlich machen. Der Schmelzekanal 95 wird über einen Verbindungskanal 96 mit der von einer Extruder kommenden Schmelze versorgt. Zu diesem Zweck ist der Verbindungskanal 96 durch den Halteflansch 86 und das Enstück 87 geführt, so daß er im letzteren seitwärts ausmündet. Die innere Mantelfläche 81 des Mantelkörpers 80 und die äußere Mantelfläche der Hülse 85 bilden miteinander einen Wendelverteiler 97 für die Schmelze, welcher einen sich in Fließrichtung keilförmig erweiternden Ringspalt 98 umschließt, innerhalb dem der Schmelzefluß allmählich von einer Wendelströmung in eine axiale Ringströmung übergeführt wird, bevor der durch den konischen Ringspalt 94 vor die Austrittsöffnung 83 gelangt. Konzentrisch zur Hülse 85 ist im Kopfabschnitt 13 noch eine Hülse 99 vorgesehen, die einen glatt zylindrischen Durchlaß 100 für die Düsennadel 15 enthält, sowie auch einen zylindrischen Außenmantel 1 hat. Vom zylindrischen Innenmantel 89 der Hülse 85 und vom zylindrischen Außenmantel 101 der Hülse 99 wird ein ringzylindrischer Durchlaßkanal 102 begrenzt, der sich auch durch das Endstück 87 hindurch fortsetzt.

Das hintere Ende der Hülse 99 steht über das hintere Ende des Endstückes 87 vor und ist dort mit Umfangsabsätzen 103 und 104 versehen. Der Umfangsabsatz 103 ist dabei als glattflächiger Passungsabsatz gestaltet, während der Umfangsabsatz 104 ein Außengewinde 105 aufweist.

In gleicher Weise wie die Hülse 64 des Kopfabschnittes 12 mit der Hülse 21 des Kopfabschnitts 11 durch Verschraubung verbunden werden kann, läßt sich daher auch die Hülse 99 des Kopfabschnitts 13 mit der Hülse 64 des Kopfabschnitts 12 in Halteverbindung bringen, wie das deutlich aus Figur 1 hervorgeht.

Das vordere Ende 106 der Hülse 99 weist wiederum gegenüber dem Durchlaß 100 stufenartig erweiterte Ausnehmungen 107 und 108 auf, von denen die erstere mit glattwandigen Passungsflächen versehen ist, während die zweite ein Innengewinde 109 enthält.

Das vordere Ende 106 der Hülse 99 liegt dabei wenigstens annähernd auf gleicher Ebene mit dem freien Ende 84 des Kopfabschnitts 13 und begrenzt dort zusammen mit der Durchlaßöffnung 83 einen ringförmigen Austrittskanal 110, in den von radial auswärts der konische Ringspalt 94 einmündet.

Der Kopfabschnitt 11 des Extrusionskopfes 10 nach Figur 1 hat einen Aufbau, der die Fertigung eines dreischichtigen, rohr- oder schlauchförmigen Vorformlings gestattet.

Der Kopfabschnitt 12 des Extrusionskopfes 10 nach Figur 1 ist so ausgelegt, daß er zwei weitere Schmelzeschichten auf den aus dem Kopfabschnitt 11 kommenden Schmelzestrang laminiert, während der Kopfabschnitt 13 des Extrusionskopfes 10 nach Figur 1 geeignet ist, eine weitere Schmelzeschicht auf den Schmelzestrang zu laminieren, welcher ihm aus dem Kopfabschnitt 12 zugeführt wird.

Jeder der Kopfabschnitt 11, 12 und 13, wie sie in Figur 5 gezeigt sind, ist so ausgelegt, daß er für sich allein zur Herstellung von schlauch- oder rohrförmigen Vorformlingen aus plastifiziertem Kunststoff mit mehrschichtigem Wandaufbau benutzt werden kann. So ermöglicht der Kopfabschnitt 11 bei eigenständigem Einsatz mit vorgeschalteter Austrittsdüse 14 die Ausbringung eines Vorformlings mit dreischichtigem Wandaufbau.

Der Kopfabschnitt 12 ist bei eigenständigem Einsatz geeignet zur Herstellung eines Vorformlings mit nur zweischichtigem Wandaufbau, wenn ihm eine Austrittsdüse 14 zugeordnet ist.

Schließlich läßt sich mit Hilfe des Kopfabschnittes 13 bei eigenständigem Einsatz und Ausstattung mit einer Austrittsdüse 14 ein Vorformling mit einschichtigem Wandaufbau fertigen.

Durch axiale Hintereinanderschaltung bzw. Verbindung der drei Kopfabschnitte 11, 12 und 13 zu einem Extrusionskopf 10 können Vorformlinge mit sechsschichtigem Wandaufbau erstellt werden.

Ein siebenschichtiger Wandaufbau wäre erreichbar, wenn mit einem Kopfabschnitt 11 zwei Kopfabschnitte 12 zu einem Extrusionskopf 10 vereinigt würden.

Durch die Hintereinanderschaltung eines Kopfabschnitts 11 und eines Kopfabschnitts 13 zu einem Extrusionskopf 10 könnte ein vierschichtiger Wandaufbau für einen Vorformling erreicht werden.

Damit die einzelnen Kopfabschnitte 11, 12 und 13 auf einfache Art und Weise zweckentsprechend miteinander kombiniert werden können, um innerhalb vorgegebener Grenzen einen unterschiedlichen Schichtenaufbau für die Vorformlinge zu erhalten, sind die miteinander zu kuppelnden Enden benachbarter Kopfabschnitte mit komplementär zueinander passenden Eingriffselementen versehen.

Als Eingriffselemente dienen dabei beispielsweise eingeformte Vertiefungen 111 im hinteren Ende sowie angeformte Vorsprünge 112 am anderen Ende dieser Kopfabschnitte 11, 12 und 13. Diese kommen gemäß Figur 1 dann so miteinander in Achsfluchteingriff, daß die Austrittskanäle 24 und/oder Durchgangskanäle 68 und 102 sämtlicher hintereinander gesetzter Kopfabschnitte 11, 12, 13 funktionsrichtig miteinander korrespondieren können. Der Zusammenhalt zwischen den einzelnen Kopfabschnitten 11, 12 und 13 eines Extrusionskopfes 10 wird über lösbare Schraubverbindungen 113 bewirkt, wie sie in Figur 1 der Zeichnung beispielsweise zu sehen sind.

Auch die Austrittsdüse 14, wie sie in den Figuren 1 und 5 gezeigt ist, hat eine Ausbildung, welche das Kuppeln mit jedem Eingriffselement 112 der Kopfabschnitte 11, 12 und 13 problemlos ermöglicht.

Aus den Figuren 1 und 5 der Zeichnung ist leicht zu entnehmen, daß die den einzelnen Wendelverteilern zugeordneten Hülsen 21, 37 und 48 bzw. 37 und 48 bzw. 85 unabhängig voneinander ausgebildet und eingebaut werden können. Daher besteht ohne weiteres die Möglichkeit, die verschiedenen Wendelverteiler vom jeweiligen Kopfabschnitt 11, 12, 13 und/oder auch voneinander thermisch getrennt einzubauen sowie sie mit voneinander unabhängigen Temperiervorrichtungen zu versehen bzw. zu verbinden.

Diese Ausgestaltungsmöglichkeit läßt es dann zu, Kunststoffmaterialien mit sehr unterschiedlichen Temperaturen von den Extrudern aus in den Extrusionskopf 10 einzuspeisen, diese Temperaturen auch bei der Materialverteilung innerhalb des Extrusionskopfes 10 aufrechtzuerhalten und dann erst im aufeinandergeschichteten Extrudat einen Temperaturausgleich zu ermöglichen.

Mit relativ geringem technischen Aufwand läßt sich durch die vorstehend erläuterten Maßnahmen die Fertigung von Vorformlingen mit unterschiedlichstem Schichtenaufbau ihrer Wände verwirklichen.

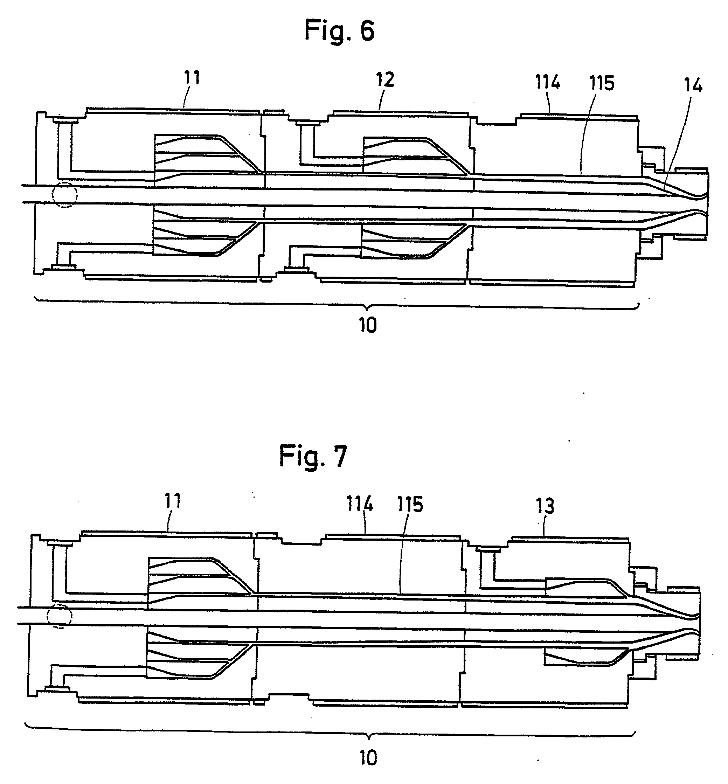

In Figur 6 der Zeichnung ist in rein schematischer Darstellung ein Extrusionskopf 10 dargestellt, welcher jeweils einen Kopfabschnitt 11 und einen Kopfabschnitt 12 umfaßt, wobei jedoch zwischen dem Kopfabschnitt 12 und der Austrittsdüse 14 noch ein Kopfabschnitt 114 angeordnet ist, mit der lediglich einen Durchlaßkanal 115 für den schlauch- oder rohrförmigen Schmelzestrang mit fünfschichtigem Wandaufbau enthält. Hierdurch wird erreicht, daß sämtliche aufeinander laminierten Schmelzeschichten eine vorgegebene, gemeinsame Fließweglänge zurücklegen müssen, bevor sie zur Extrudatbildung in die Austrittsdüse 14 gelangen.

Bei dem Ausführungsbeispiel eines Extrusionskopfes 10 nach Figur 6 ist ein Kopfabschnitt 114 mit nur einem Durchlaßkanal 115 zwischen einem Kopfabschnitt 11 und einem Kopfabschnitt 13 gemäß Figur 5 eingebaut. Es läßt sich hierdurch ein Vorformling herstellen, der einen vierschichtigen Wandaufbau hat und bei dem die im Kopfabschnitt 11 aufeinander laminierten drei Wandungsschichten erst einen gemeinsamen Fließweg vorgegebener Länge durchlaufen müssen, bevor die vierte und letzte Schmelzeschicht auf den Vorformling laminiert wird.

Die vorstehend beschriebenen Bauformen von Kopfabschnitten 11 bis 13 und 114 für Extrusionsköpfe 10 ermöglichen einen variantenreichen Wandaufbau beim Strangpressen von schlauch- oder rohrförmigen Vorformlingen aus Kunststoffmaterial auf der Basis der sogenannten Co-Extrusion unter Verwendung von in ihrem Druchmesser relativ kleinen und hinsichtlich ihrer Länge auch relativ kurzen Extrusionsköpfen 10.

**Patentansprüche**

1. Extrusionskopf mit mehreren hintereinander angeordneten Kopfabschnitten zum Strangpressen von schlauch- oder rohrförmigen Vorformlingen mit mehrschichtigem Wandaufbau aus in Extrudern plastifiziertem Kunststoffmaterial, dadurch gekennzeichnet, daß gleiche oder gleichartige Kopfabschnitte (11, 12, 13; 114) mit jeweils einem zentralen, ringförmigen Austritts- und/oder Durchgangskanal (24, 68, 79, 90, 110; 115) wahlweise hintereinander setzbar sind, daß jeder dieser Kopfabschnitte (11, 12, 13) mindestens einen mit einem Ringspalt (47, 94) in den Austritts- und/oder Durchgangskanal (24, 68, 76, 90, 110 einmündenden Wendelverteiler (40, 52, 60, 97) enthält, und daß die einander zugewendeten Enden benachbarter Kopfabschnitte (11, 12, 13; 114) zueinander komplementär passende Eingriffselemente (111, 112) aufweisen, über die die Austritts- und/oder Durchgangskanäle (24; 68; 79; 110) miteinander in Achsfluchtlage bringbar sind.

2. Extrusionskopf nach Anspruch 1, dadurch gekennzeichnet, daß jeder Kopfabschnitt (11, 12, 13) mit bis zu drei konzentrisch ineinander sitzenden Wendelverteilern (40, 52, 60 bzw. 97) ausgestattet ist, die sämtlich in den Austritts- und/oder Durchgangskanal (24, 76, 110) des sie enthaltenden Kopfabschnittes (11, 12, 13) münden.

3. Extrusionskopf nach einem der Ansprüche 1 und 2,
**dadurch gekennzeichnet,**
daß jeder Kopfabschnitt (11, 12, 13) ein Endstück (30, 66, 87) trägt, das eine der Anzahl der Wendelverteiler (40, 52, 60, 97) entsprechende Anzahl von Anschluß- und Zuführkanälen (29, 62, 63, 96) für das plastifizierte Kunststoffmaterial enthält.

4. Extrusionskopf nach einem der Ansprüche 1 bis 3,
**dadurch gekennzeichnet,**
daß zwischen zwei gleiche oder gleichartige Kopfabschnitte (11, 13) ein lediglich mit einem Durchlaßkanal (115) versehener Kopfabschnitt (114) einsetzbar ist (Fig. 7).

5. Extrusionskopf nach einem der Ansprüche 1 bis 4,
**dadurch gekennzeichnet,**
daß der Austrittsdüse (14) ein lediglich mit einem Durchlaßkanal (115) versehener Kopfabschnitt (114) vorgeschaltet ist (Fig. 6).

6. Extrusionskopf nach einem der Ansprüche 1 bis 5,
**dadurch gekennzeichnet,**
daß bis zu drei gleiche oder gleichartige Kopfabschnitte (11, 12, 13) mit je mindestens einem Wendelverteiler (40, 52, 60 bzw. 97) hintereinander schaltbar sind (Fig. 1).

7. Extrusionskopf nach einem der Ansprüche 1 bis 6,
**dadurch gekennzeichnet,**
daß bei den hintereinander geschalteten Kopfabschnitten (11 bis 13) die Anzahl der Wendelverteiler (40, 52, 60; 97) in Richtung zur Austrittsdüse (14) hin abnimmt (Fig. 1).

8. Extrusionskopf nach einem der Ansprüche 1 bis 7,

**dadurch gekennzeichnet,**

daß die Wendelverteiler (4O, 52, 6O; 97) vom Kopfabschnitt (11, 12, 13) und/oder voneinander thermisch getrennt eingebaut sind.

9. Extrusionskopf nach einem der Ansprüche 1 bis 8,

**dadurch gekennzeichnet,**

daß die Wendelverteiler (4O, 52, 6O;97) mit voneinander unabhängigen Temperiervorrichtungen versehen bzw. verbunden sind.

1O. Extrusionskopf nach einem der Ansprüche 1 bis 9,

**dadurch gekennzeichnet,**

daß die Wendelverteiler (4O, 52, 6O; 97) jeweils Hülsen (21, 37, 48; 85) aufweisen, die an ihrem Außenmantel einen schwach konisch geneigten Hauptabschnitt (26, 42, 54; 91) großer Länge und einen steil konischen Endabschnitt (45, 55; 92) geringer Länge haben, während ihr Innenmantel (39, 51; 89) auf der ganzen Länge zylindrisch ausgeführt ist.

11. Extrusionskopf nach einem der Ansprüche 1 bis 1O,

**dadurch gekennzeichnet,**

daß jeder Kopfabschnitt (11, 12, 13; 114) eine von der Düsennadel (15) durchsetzte zentrale Hülse (26, 64, 99) enthält und die Hülsen benachbarter Kopfabschnitte (11, 12, 13; 114) über Gewinde (36, 74 und 77, 1O5) miteinander kuppelbar sind.

## Claims

1. Extruder head with several head portions, which are arranged one behind the other, for the extrusion of hose-shaped or tubular blanks of multilayer wall construction of synthetic material plasticised in extruders, characterised thereby, that like or similar head portions (11, 12, 13; 114) each with a respective central annular exit and/or passage channel (24, 68, 79, 90, 110; 115) are selectably settable one behind the other, that each of these head portions (11, 12, 13) contains at least one helical distributor (40, 52, 60, 97) opening by an annular gap (47, 94) into the exit and/or passage channel (24, 68, 76, 90, 110) and that the mutually facing ends of adjacent head portions (11, 12, 13; 114) display mutually complementarily fitting engagement elements (111, 112), by way of which the exit and/or passage channels (24; 68; 79; 90; 110) are bringable into axially aligned position one with the other.

2. Extruder head according to claim 1, characterised thereby, that each head portion (11, 12, 13) is equipped with up to three helical distributors (40, 52, 60 or 97), which sit one concentrically in the other and all open into the exit and/or passage channel (24, 76, 110) of the head portion (11, 12, 13) containing them.

3. Extruder head according to one of the claims 1 and 2, characterised thereby, that each head portion (11, 12, 13) carries an end member (30, 66, 87), which contains a number, which corresponds to the number of the helical distributors (40, 52, 60, 97), of connecting and feed channels (29, 62, 63, 96) for the plasticised synthetic material.

4. Extruder head according to one of the claims 1 to 3, characterised thereby, that a head portion (114) provided merely with a passage channel (115) is insertable between two like or similar head portions (11, 13) (Fig. 7).

5. Extruder head according to one of the claims 1 to 4, characterised thereby, that a head portion (114) provided merely with a passage channel (115) is connected upstream of the exit nozzle (14) (Fig. 6).

6. Extruder head according to one of the claims 1 to 5, characterised thereby, that up to three like or similar head portions (11, 12, 13) each with at least one respective helical distributor (40, 52, 60 or 97) are connectable one behind the other (Fig. 1).

7. Extruder head according to one of the claims 1 to 6, characterised thereby, that the number of the helical distributors (40, 52, 60; 97) decreases in direction towards the exit nozzle (14) in the case of the head portions (11 to 13) connected one behind the other (Fig. 1).

8. Extruder head according to one of the claims 1 to 7, characterised thereby, that the helical distributors (40, 52, 60; 97) are built in to be thermally separate from the head portion (11, 12, 13) and/or one from the other.

9. Extruder head according to one of the claims 1 to 8, characterised thereby, that the helical distributors (40, 52, 60; 97) are either provided or connected with mutually independent tempering devices.

10. Extruder head according to one of the claims 1 to 9, characterised thereby, that the helical distributors (40, 52, 60; 97) each display respective sleeves (21, 37, 48; 85), which at their outer shell have a slightly conically inclined main portion (26, 42, 54; 91) of great length and a steeply conical end portion (45, 55; 92) of short length, whilst their inner shell (39, 51; 89) is constructed to be cylindrical over the entire length.

11. Extruder head according to one of the claims 1 to 10, characterised thereby, that each head portion (11, 12, 13; 114) contains a central sleeve (26, 64, 99) passed through by the nozzle needle (15) and the sleeves of adjacent head portions (11, 12, 13; 114) are one couplable with the other by way of threads (36, 74 and 77, 105).

## Revendications

1. Tête d'extrusion comportant plusieurs segments de tête disposés à la suite les uns des autres pour le filage à la presse d'ébauches en forme de gaines ou de tubes ayant une structure de paroi stratifiée à plusieurs couches en matière synthétique plastifiée dans des extrudeuses, caractérisée en ce que des segments de tête (11, 12, 13; 114) identiques ou analogues comportant chacun un conduit annulaire central (24, 68, 79, 90, 110; 114) de sortie et/ou de passage peuvent être disposés à volonté les uns à la suite des autres, en ce que chacun de ces segments de tête (11, 12, 13) contient au moins un distributeur hélicoïdal (40, 52, 60, 97) qui, par un intervalle annulaire (47, 94), débouche dans le conduit de sortie et/ou de passage (24, 68, 76, 90, 110) et en ce que les extrémités de segments de tête voisins (11, 12, 13; 114) qui sont tournées l'une vers l'autre comportent des éléments d'assemblage (11, 112) qui s'adaptent et en se complétant et au moyen desquels les conduits (24, 48; 79; 90; 110) de sortie et/ou de passage peuvent être alignés dans le prolongement les uns des autres.

2. Tête d'extrusion selon la revendication 1, caractérisée en ce que chaque segment de tête (11, 12, 13) comporte des distributeurs hélicoïdaux (40, 52, 60 ou 97) qui sont disposés concentriquement les uns par rapport aux autres et qui, tous, débouchent dans le conduit (24, 76, 110) de sortie et/ou de passage du segment de tête (11, 12, 13) qui les contient.

3. Tête d'extrusion selon l'une des revendications 1 ou 2, caractérisée en ce que chaque segment de tête (11, 12, 13) comporte une pièce d'extrémité (30, 66, 87) qui contient un nombre de conduits (29, 62, 63, 96) de raccord et d'amenée de la matière synthétique plastifiée qui correspond au nombre des distributeurs hélicoïdaux (40, 52, 60, 97).

4. Tête d'extrusion selon une des revendications 1 à 3, caractérisée en ce qu'entre deux segments de tête (11, 13) identiques ou analogues elle peut comprendre un segment de tête (114) ne comportant qu'un seul conduit de passage (115) (Figure 7).

5. Tête d'extrusion selon une des revendications 1 à 4, caractérisée en ce que la buse ou tubulure de sortie (14) est précédée par un segment de tête (114) ne comportant qu'un seul conduit de passage (115) (Figure 6).

6. Tête d'extrusion selon une des revendications 1 à 5, caractérisée en ce qu'un certain nombre, qui peut aller jusqu'à trois, de segments de tête (11, 12, 13) identiques ou analogues comportant chacun un distributeur hélicoïdal (40, 52, 60 ou 97) peuvent être disposés les uns à la suite des autres (Figure 1).

7. Tête d'extrusion selon une des revendications 1 à 6, caractérisée en ce que lorsque les segments de tête (1 à 13) sont disposés les uns derrière les autres, le nombre des distributeurs hélicoïdaux (40, 52, 60; 97) diminue dans la direction de la buse ou tubulure de sortie (14) (Figure 1).

8. Tête d'extrusion selon une des revendications 1 à 7, caractérisée en ce que les distributeurs hélicoïdaux (40, 52, 60; 97) sont montés de manière à être thermiquement séparés du segment de tête (11, 12, 13) et/ou les uns des autres.

9. Tête d'extrusion selon une des revendications 1 à 8, caractérisée en ce que les distributeurs hélicoïdaux (40, 52, 60; 97) comportent ou sont reliés à des dispositifs de réglage de la température indépendants les uns des autres.

10. Tête d'extrusion selon une des revendications 1 à 9, caractérisée en ce que les distributeurs hélicoïdaux (40, 52, 60; 97) comprennent chacun des douilles (21, 37, 48; 85) qui comportent au niveau de leur enveloppe extérieure, un secteur principal (26, 42, 54; 91) de faible conicité et de grande longueur et un secteur d'extrémité (45, 55; 92) de conicité à forte pente et de faible longueur, tandis que leur enveloppe intérieure (39, 51; 89) est cylindrique sur toute sa longueur.

11. Tête d'extrusion selon une des revendications 1 à 10, caractérisée en ce que chaque segment de tête (11, 12, 13; 114) contient une douille centrale (26, 64, 99) traversée par une broche de tubulure de buse (15) et que les douilles de segments de tête voisins (11, 12, 13; 114) peuvent être accouplées les unes aux autres par des filetages (36, 74 et 77, 105).

Fig. 1

Fig. 2

Fig. 3

Fig. 4

Fig. 5

# Fig. 6

# Fig. 7